Europäisches Patentamt

(19) European Patent Office

Office européen des brevets

(11) Publication number: **0 257 147**
**B1**

# EUROPEAN PATENT SPECIFICATION

(12)

(45) Date of publication of the patent specification: **04.10.89**

(51) Int. Cl.⁴: **F02K 1/12, F02K 1/38**

(21) Application number: **86306349.1**

(22) Date of filing: **18.08.86**

(54) Turbomachine ejector nozzles.

(43) Date of publication of application: **02.03.88 Bulletin 88/9**

(45) Publication of the grant of the patent: **04.10.89 Bulletin 89/40**

(84) Designated Contracting States: **DE FR GB IT**

(56) References cited:
DE-A- 1 626 145
FR-A- 1 307 026
GB-A- 1 085 090
GB-A- 2 119 022
US-A- 3 095 695
US-A- 3 386 658
US-A- 3 612 400
US-A- 4 043 509

(73) Proprietor: **ROLLS-ROYCE plc, 65 Buckingham Gate, London, SW1E 6AT(GB)**

(72) Inventor: **Szuminski, Gary Frank, 448 Springs End Lane, Marietta Georgia 30067(US)**

(74) Representative: **Bird, Vivian John, Rolls-Royce plc PO Box 3, Filton, Bristol BS12 7QE(GB)**

ACTORUM AG

## Description

This invention relates to nozzles for gas turbine aero-engines and is particularly concerned with variable geometry nozzles and the suppression of the infra red radiation emitted by the hot exhaust plume of such engines.

Modern combat aircraft require the flexibility of being able to fly at subsonic or supersonic speeds and to perform a variety of roles. In some roles it is necessary to augment the basic thrust produced by the engine in the "dry" mode by burning additional fuel downstream of the engine's turbines, utilising the unburnt oxygen in the exhaust gases to support combustion. This mode is known as reheat or afterburning. During reheat it is necessary to increase the area of nozzle to accommodate the increased volume of gases so not to impair the efficient functioning of the engine. In other roles such as supersonic cruise, it is desirable to vary the geometry of the exhaust nozzle of the engine from a convergent geometry for subsonic speed to a configuration having an increased area throat (compared to that required during the "dry" mode or at subsonic cruise) formed between a convergent and divergent part of the nozzle - often referred to as a condi nozzle.

There are times during the flight envelope of an aircraft when reheat is not required and when the prime requisite is to reduce the infra red emission of the exhaust plume and thereby reduce or avoid detection by heat seeking missiles directed towards the aircraft. These missiles usually detect the infrared radiation of the hot exhaust gas plume and once the plume is located, home in on the hot parts of the engine to destroy the aircraft.

There is a need for a nozzle design that not only caters for dry and reheat modes of operation, but also enables one selectively to reduce the infra red emission of the engine.

British patent 2 119 022 discloses a variable area variable geometry nozzle for a gas turbine aero-engine. The nozzle is essentially a convergent-divergent nozzle formed by three axisymmetric sets of flaps (38, 43, 47). All the flaps are mounted on an axially translatable member 28. The convergence of flaps 38 and the divergence of flaps 43 are determined by the first flaps 38 co-operating with fixed cam tracks.

The nozzle of British patent 2 119 022 has thrust reverser doors 61 which serve two roles; in a first role they act as conventional thrust reverser doors and redirect exhaust gas out of openings 59 upstream of the throat defined by the convergent flaps 38. In a second role the doors 61 are rotated forwards to define a throat upstream of the flaps 38. In this latter role the openings 59 form air intakes immediately upstream of the convergent flaps, and an ejector nozzle is formed which reduces the infra red emissions of the nozzle and gas plume.

The nozzle of British patent 2 119 022 is suitable where there is a need to provide thrust reverse but where there is no need the nozzle is too heavy too complicated and too expensive.

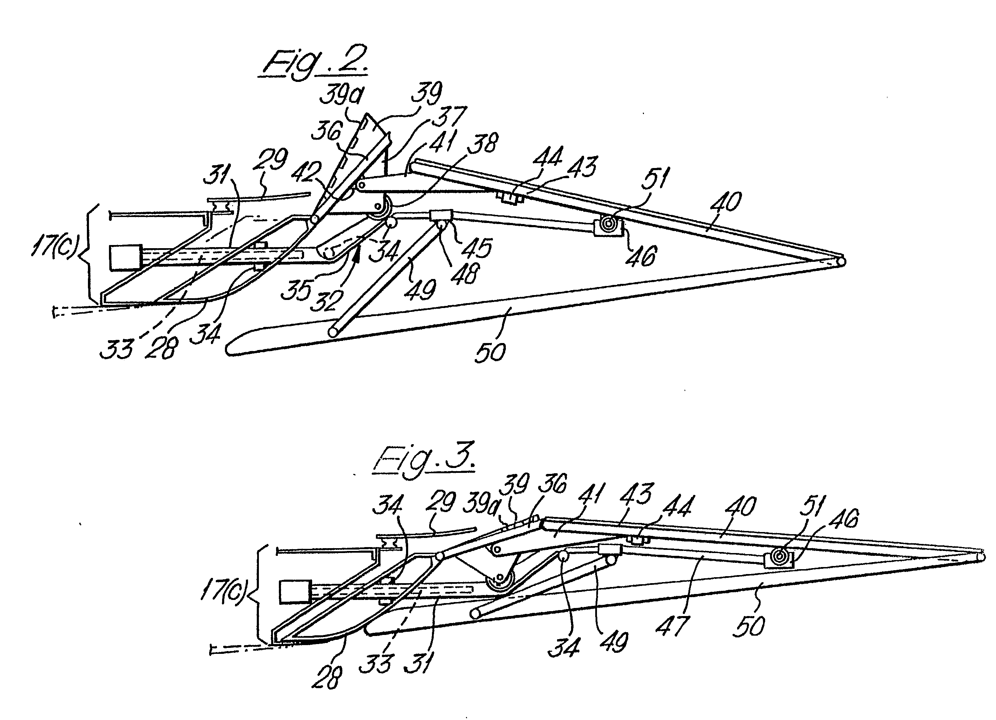

US Patent 4 043 509 discloses a nozzle comprising an inner primary nozzle and an outer secondary nozzle. The primary nozzle comprises a plurality of flaps 38 whereas the secondary nozzle comprises a set of first flaps 44 and second flaps 48. An ejector air intake is formed between the two nozzles; that is to say between the flaps 38 and flaps 44. When the flaps 38 are in a convergent position the air inlet downstream of the throat is always open and cannot be closed off. Furthermore when the flaps 38 are convergent the flaps 44, 48 are effectively inoperable and do not form part of the effective nozzle of the engine. It is only when the flaps are in the position shown in Figure 4 of this US Patent that the flaps 44, 48 function to define a nozzle.

The outermost flaps 44 provide fairing to reduce the base drag but cannot be used to close off the air inlet.

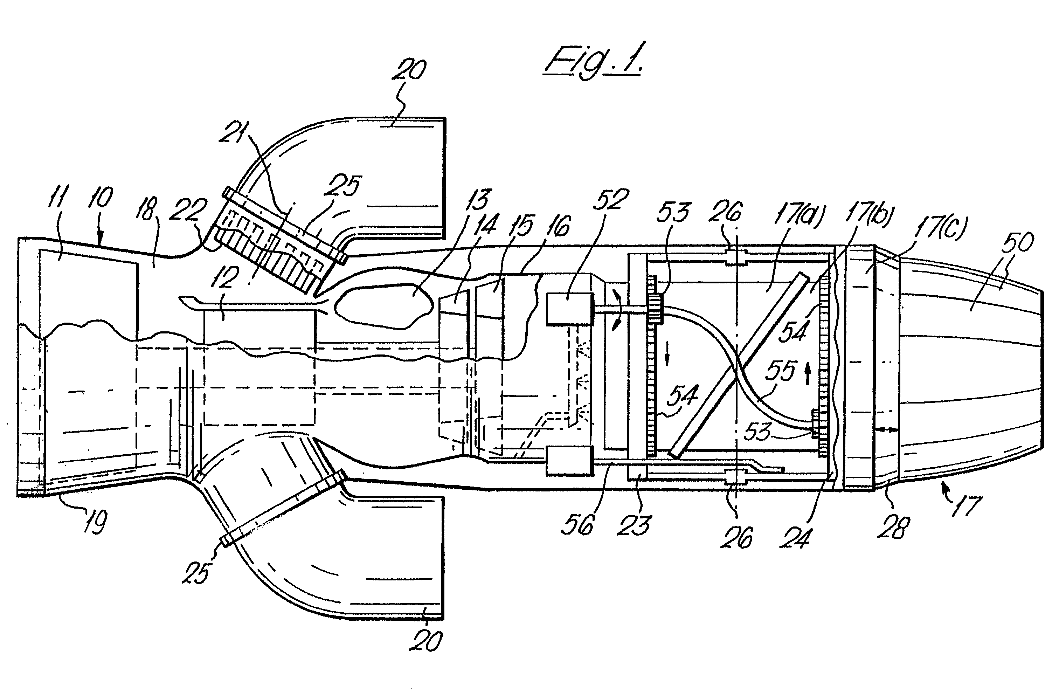

The design of nozzle in this US Patent is very heavy and constitutes parasitic weight because the flaps 44 are redundant, in the sense of defining a nozzle, when the flaps are in the position shown in Figure 1.

The present invention provides an ejector nozzle which uses the convergent flaps to define a throat and forms an ejector air intake downstream of the throat.

An object of the present invention is to provide a variable geometry nozzle which is capable of use both in the dry and reheat modes of operation and also capable of reducing the infra red emission of the hot exhaust gas plume.

The invention as claimed enables one to vary the geometry of the nozzle to cope with dry and reheat modes of operation by moving the flaps and enables one to reduce the infra red emission by opening additional air inlets downstream of a throat defined by the flaps which admit ambient air to cool and shield the hot exhaust plume.

The nozzle of the present invention may be installed on a fixed jet pipe or on a vectorable jet pipe. Furthermore, the nozzle of the present invention may be installed on the vectorable front nozzles of an engine such as the Rolls-Royce plc Pegasus engine which discharge cold or reheated by-pass air.

The invention will now be described, by way of an example, with reference to the accompanying drawings in which:

Figure 1 illustrates schematically a gas turbine aero-engine incorporating three vectorable nozzles, the rear one of which is constructed in accordance with the present invention.

Figure 2 illustrates in more detail a sectional elevation of part of the rear nozzle of the engine shown in Figure 1, showing the nozzle in the "ejector mode", and,

Figure 3 shows the nozzle of Figure 2 in the maximum area re-heat mode.

Referring to Figure 1 there is shown schematically a gas turbine aero engine 10 of the by-pass type. The engine comprises in flow series, an axial flow low pressure compressor 11, an axial flow high pressure compressor 12, a combustion chamber 13, a high pressure turbine 14 which drives the HP compressor 12 a low pressure turbine 15 which drives the LP compressor 11, a jet pipe 16 terminating in a vectorable variable area nozzle 17.

The LP compressor 11 supplies compressed air to the HP compressor 12 and to a plenum chamber 18 which forms part of the by-pass duct 19 and which terminates in two vectorable nozzles 20. The nozzles 20 are mounted in bearings 25 for rotation through an angle of approximately 100° about an axis 21.

Additional combustion equipment 22 is provided in the plenum chamber 18 so that additional fuel can be burnt in the air stream ejected through the nozzles 20 to increase the thrust. To enable the engine to run efficiently the nozzles 17 and 20 are provided with variable-area, variable-geometry outlets. For convenience the invention will be more particularly described with reference to nozzle 17 but it is to be understood that the mechanism for varying the area and geometry may be similar for all the nozzles 17 and 20, and may also be used with nozzles for fixed jet pipes.

The nozzle 17 is of the type in which a scarfed rotatable duct 17 (a) is mounted in bearings 23 on the downstream end of the jet pipe 16, and a second scarfed duct 17 (b) is mounted in bearings 24 for rotation in the opposite direction to that of duct 17 (a). The bearing 24 is described in more detail in US Patent 4 519 543. In operation, the bearing 24 is rotated about the axis of the trunnions 26 by means of a screw jack (shown schematically by the numeral 56) which pushes on the brackets that support the bearing 24 in the trunnions 26. As the bearing 24 is swung about the axis of the trunnions 26 the ducts 17 (a) and 17 (b) are rotated in opposite directions by means of a motor 52 and sprockets 53, chain drives 54 and flexible drive shaft 55 as explained in the above mentioned US patent.

The nozzle 17 has at its downstream end a duct 17 (c) which is carried by the fixed race of the bearing. It is this duct 17 (c) that is provided with the mechanism for varying the geometry and area of the outlet of the nozzle 17 in accordance with the present invention, as shown in Figures 2 and 3.

Referring to Figures 2 and 3, the mechanism for varying the geometry and area of the outlet nozzle comprises an annular member 28 which is translatable axially and on which is carried three sets of flaps as will be described below. The member 28 is mounted to slide axially inside the downstream end duct 17 (c) and the member 28 comprises an annular hollow box structure.

The member 28 slides inside the bore of the duct 17 (c) and a heat shield line 29 is provided to protect the duct 17 (c) and the member 28 from the hot gases flowing through the nozzle when the reheat combustor 30 in the jet pipe is ignited.

The member 28 is supported on axially extending tubes 31 which carry an annular cam-ring assembly 32.

Located between the tubes 31 are lead screws 33 of screw jacks which engage nuts 34 (of the recirculating ball type) fixed to the member 28. Rotation of the lead screws 33 by a motor drive through gearboxes pushes and pulls the member 28 to and fro in the axial direction.

The cam-ring assembly 32 comprises two polygonal frameworks of tubes 34 interconnected by a plurality of cams 35 facing inwards (only one of which is shown). The cams 35 are equispaced around the axis of the duct 17 (c).

A set of first primary flaps 36 is pivotal, attached to the member 28. Each first primary flap 36 is pivotally attached at its upstream end to the downstream inner circumferential end of the member 28 and has a web 37 projecting from its outer facing side. The web 37 carries a cam follower 38, in the form of a roller, that engages one of the cams 35 to define and vary the attitude of the flaps 36 relative to member 28 as member 28 is moved in axial directions.

The flaps 36 comprise a hollow structure with spaced walls which are made from a carbon-carbon material such as Pyrocarb (Registered US Trade mark) material as manufactured by Hitco of USA. Pyrocarb materials comprise a carbon matrix in which is embedded a woven cloth of carbon fibres. The material is protected from oxidation either by overcoating it with a non-oxidising protective layer, or by impregnating silicon into it and converting the silicon to silicon carbide. Adjacent flaps 36 are interconnected by means of pairs of sealing plates 39 located between adjacent flaps 36. The sealing plates 39 are connected to the side edges of the flaps 36 by means of axially extending hinges. Each pair of plates 39 are also connected together by hinges 39 (a) which extend axially. The hinged attachments of the plates 39 to the flaps 36 permit the flaps 36 to assume different diameters to vary the area of the nozzle formed by the flaps 36.

A second flap 40 is pivotally attached at its upstream end to each flap 36. Each flap 40 is a hollow structure of spaced carbon-carbon walls similar to flaps 36, and each flap 40 is provided with a flange 41 projecting forwards of the upstream end of the flaps 40. The flanges 41 are pivotally connected to lugs 42 on the outside surface of flaps 36 at a position intermediate the upstream and downstream ends of the flaps 36.

The second flaps 40 are spaced circumferentially and the gaps between them are closed-off by thin carbon-carbon seal plates 43. The upstream ends of the seal plates 43 are located on the inward-facing side of the flaps 40 and are constrained from falling inwards by rollers 44 which are mounted on flanges that project through the gaps between flaps 40 to engage the outer surface of the flaps 40. The seal plates 43 allow the flaps 40 to assume different positions where they define a divergent part of the nozzle by sliding relative to the flaps 40.

The cam ring assembly 32 also includes two fixed rings 45, 46 located downstream of the cams 35. The fixed rings are connected back to the fixed structure of the cam ring assembly 32 by struts 47. The fixed ring 45 has spaced around its outer diameter a number of lugs 48 on each of which is mounted a pivotal link 49.

A set of third flaps 50 made of a carbon fibre reinforced polymide material are pivotally mounted at an upstream end on the links 49. Each of the flaps 50 is pivotally attached at its downstream end to the downstream end of one of the second flaps 40. The flaps 50 overlap each other to accommodate different positions of the flaps 50 and form a seal therebetween.

The fixed ring 46 is located at a position intermediate the upstream and downstream ends of the flaps 40 and is provided with circumferentially spaced rollers 51 each of which is arranged with its axis of rotation tangential to the circumference of the ring 46. Each roller 51 engages the outside surface of one of the flaps 40 and allows the flaps to move in axial directions relative to the ring 46.

In operation of the nozzle, with the member 28 moved rearwards to the fully rearwards position (shown in Figure 2), the cams 35 and cam followers 38 push the flaps 36 inwards to define a convergent throat.

Simultaneously the flaps 40 are moved bodily rearwards and because they are pivotally connected at their downstream ends to the flaps 50, they pull the flaps 50 rearwards. This in turn compresses the links 49 and, because they are constrained by the ring 45, the outer ends of the links 49 push the upstream end of the flaps 50 outwards to open up an air intake. Ambient air flows into the intake and exits into the hot gas flowing through the nozzle through the gap between, on the one hand, the downstream ends of the flaps 36 and sealing plates 39, and on the other hand, the upstream ends of the flaps 40 and seal plates 43.

Axial movement of the flaps 36, 40 and 50 causes the flaps 40 to rock about the fulcrum provided by the rollers 51 to define the proper divergent exit area of the nozzle downstream of the throat defined by the flaps 36.

The colder ambient air mixes with the hot turbine exhaust gases to cool the plume and reduce the infra red emissions thereof.

Pulling the member 28 forwards to the position shown in Figure 3 causes the cam follower 38 to follow the cam 35 and pulls the flaps 36 outwards to define a maximum area throat as would be required during the reheat mode. The length of flange 41 is chosen so that in this position of flap 36 the upstream edges of the flaps 40 and seal plates 43 seal against the downstream ends of flaps 36 and plates 39. Forward movement of the flaps 40 pulls the flaps 50 forwards and simultaneously closes off the air intake.

Clearly, at intermediate positions between those shown in Figures 2 and 3 various combinations of convergence and divergence with different throat areas can be obtained.

## Claims

1. A variable area and variable geometry exhaust nozzle for a gas turbine aero-engine comprising a duct extending along an axis; a member (28) translatable along the duct; a plurality of first flaps (36) spaced circumferentially around the axis, each first flap (36) being pivotably attached at its upstream end to the member (28) and being provided with a cam follower (38) that co-operates with a cam (35) that is fixed relative to the duct to define the attitude of the first flaps (36) relative to the duct (17c); a plurality of first seal plates (39) interposed circumferentially between the first flaps (36) to close off the circumferential gaps between the first flaps (36); a plurality of circumferentially spaced second flaps (40) each of which is pivotally attached at its upstream end to a downstream region of each first flap (36); a plurality of second seal plates (43) circumferentially interposed between the second flaps (40) to close off the circumferential gaps between the second flaps (40); and a plurality of third flaps (50) each of which is pivotally attached at its downstream end to a downstream region of each second flap (40) characterised in that an opening is formed between the downstream end of the first flaps (36) and the upstream end of the second flaps (40) when the first and second flaps (36, 40) are in a predetermined position; structure (32, 45, 46, 47), which is fixed relative to the duct (17c) encircles the second flaps (40) at a region intermediate the upstream and downstream ends of the second flaps (40) and provides a fulcrum (51) about which each second flap (40) rocks to assume various attitudes relative to the duct (17c); and, a plurality of links (49) are provided, each link (49) being pivotally attached at one end to the structure (32, 45, 46, 47) and being pivotally attached at its other end to an upstream region of one of the third flaps (50), the links (49) being dimensioned and positioned so that when the member (28) is translated rearwards to move the first and second flaps (36, 40) to the predetermined position, the second flaps rock about the fulcrums (51) and the links move the third flaps (50) to define an air intake which allows ambient air to flow into the nozzle through the opening defined between the first and second flaps (36, 40).

2. An exhaust nozzle according to Claim 1 wherein pairs of first seal plates (39) are interposed between juxtaposed first flaps (36), the seal plates (39) are pivotally connected to each other along a first side edge and are pivotally connected to the first flaps 39 along a second side edge.

3. An exhaust nozzle according to claim 1 or claim 2 wherein the second seal plates (43) are provided with a roller means which contacts the outward facing sides of the second flaps (40) and the second seal plates (43) are pivotally attached at their downstream ends to the downstream ends of the third flaps (50).

4. An exhaust nozzle according to claim 1 or claim 2 wherein the fulcrum comprises a plurality of circumferentially spaced rollers (51) mounted on a ring (46) each roller being positioned to co-operate with one of the second flaps (40) and arranged with its axis of rotation tangential to a circumference of the ring (46).

## Patentansprüche

1. Querschnitts- und geometrieveränderliche Abgasdüse für ein Gasturbinen-Flugzeugtriebwerk, mit einem entlang einer Achse verlaufenden Kanal, einem entlang des Kanals verschiebbaren Bauteil (28), einer Mehrzahl von umfangsmäßig mit gegenseitigen Abständen um die Achse herum angeordneten ersten Klappen (36), von denen jede erste Klappe (36) an ihrem stromaufwärtigen Ende schwenkbar an dem Bauteil (28) befestigt und mit einem Profilfolgeorgan (38) versehen ist, das mit einem relativ zum Kanal feststehenden Profil (35) zusammenwirkt, um die Stellung der ersten Klappen (36) relativ zum Kanal (17c) festzulegen, weiter mit einer Mehrzahl erster Dichtungsplatten (39), die umfangsmäßig zwischen den ersten Klappen (36) angeordnet sind, um die umfangsmäßigen Spalte zwischen den ersten Klappen (36) zu verschließen, einer Mehrzahl von mit umfangsmäßigen Abständen angeordneten zweiten Klappen (40), die jeweils mit ihrem stromaufwärtigen Ende an einem stromabwärtigen Bereich jeweils einer ersten Klappe (36) schwenkbar befestigt sind, einer Mehrzahl von zweiten Dichtungsplatten (43), die umfangsmäßig zwischen den zweiten Klappen (40) angeordnet sind, um die umfangsmäßige Spalte zwischen den zweiten Klappen (40) zu verschließen, und einer Mehrzahl von dritten Klappen (50), von denen jede mit ihrem stromabwärtigen Ende schwenkbar an einem stromabwärtigen Bereich jeweils einer zweiten Klappe (40) befestigt ist, dadurch gekennzeichnet, daß zwischen dem stromabwärtigen Ende der ersten Klappen (36) und dem stromaufwärtigen Ende der zweiten Klappen (40) eine Öffnung gebildet ist, wenn die ersten und zweiten Klappen (36, 40) sich in einer vorgegebenen Position befinden, daß weiter eine relativ zum Kanal (17c) feststehende Konstruktion (32, 45, 46, 47) die zweiten Klappen (40) in einem zwischen den stromaufwärtigen und stromabwärtigen Enden der zweiten Klappen (40) liegenden Bereich umschließt und jeweils einen Kipplager (51) bildet, um welche jede zweite Klappe (40) zur Annahme verschiedener Stellungen mit Bezug auf den Kanal (17c) kippt, und daß eine Mehrzahl von Lenkern (49) vorgesehen ist, von denen jeder Lenker (49) mit einem Ende gelenkig an der Konstruktion (32, 45, 46, 47) befestigt und mit seinem anderen Ende an einem stromaufwärtigen Bereich jeweils einer der dritten Klappen (50) gelenkig befestigt ist und wobei die Lenker (49) so bemessen und positioniert sind, daß, wenn das Bauteil (28) rückwärts verschoben wird, um die ersten und zweiten Klappen (36, 40) in die vorgegebene Position zu bewegen, die zweiten Klappen (40) um das Kipplager (51) kippen und die Lenker die dritten Klappen (50) so bewegen, daß ein Lufteinlaß gebildet wird, der den Zutritt von Umgebungsluft in die Düse durch die zwischen den ersten und zweiten Klappen (36, 40) gebildete Öffnung ermöglicht.

2. Abgasdüse nach Anspruch 1, wobei Paare von ersten Dichtungsplatten (39) zwischen benachbarten ersten Klappen (36) angeordnet sind und die Dichtungsplatten längs einer ersten Seitenkante gelenkig miteinander verbunden und längs einer zweiten Seitenkante mit den ersten Klappen (36) gelenkig verbunden sind.

3. Abgasdüse nach Anspruch 1 oder 2, wobei die zweiten Dichtungsplatten (43) mit einer Rolle versehen sind, die in Berührung mit den auswärts weisenden Seiten der zweiten Klappen (40) stehen, und wobei die zweiten Dichtungsplatten (43) mit ihren stromabwärtigen Enden gelenkig an den stromabwärtigen Enden der dritten Klappen (50) befestigt sind.

4. Abgasdüse nach Anspruch 1 oder 2, wobei das Kipplager eine Mehrzahl von umfangsmäßig beabstandeten Rollen (51) aufweist, die auf einem Ring (46) montiert sind, wobei jede Rolle so positioniert ist, daß sie mit einer der zweiten Klappen (40) zusammenwirkt und ihre Drehachse tangential zum Umfang des Ringes (46) verläuft.

**Revendications**

1. Tuyère d'échappement à section variable et géométrie variable pour un moteur d'avion à turbine à gaz, comprenant un conduit s'étendant le long d'un axe, un élément (28) déplaçable en translation le long du conduit, une pluralité de premiers volets (36) périphériquement espaces autour de l'axe, chaque premier volet (36) étant monté pivotant, à son extrémité amont, sur l'élément (28), et étant muni d'une contre-came (38) qui coopère avec une came (35) qui est fixe par rapport conduit, afin de définir l'orientation des premiers volets (36) par rapport au conduit (17c), une pluralité de premières plaques d'étanchéité (39) intercalées périphériquement entre les premiers volets (36), pour fermer les interstices périphériques entre les premiers volets (36), une pluralité de deuxièmes volets périphériquement espaces (40), dont chacun est monté pivotant, à son extrémité amont, sur une région aval de chaque premier volet (36), une pluralité de deuxièmes plaques d'étanchéité (43) intercalées périphériquement entre les deuxièmes volets (40), pour fermer les interstices périphériques entre les deuxièmes volets (40) et une pluralité de troisième volets (50), dont chacun est monté pivotant, à son extrémité aval, à une région aval de chaque deuxième volet (40), caractérisé en ce qu'une ouverture est formée entre l'extrémité aval, des premiers volets (36) et l'extrémité amont des deuxièmes volets (40) lorsque les premiers et deuxièmes volets (36, 40) sont à une position prédéterminée, une structure (32, 45, 46, 47), qui est fixe par rapport au conduit (17c), encercle les deuxièmes volets (40) sur une région intermédiaire entre les extrémités amont et aval des deuxièmes volets (40), et fournit un point d'appui (51) autour duquel chaque deuxième volet (40) bascule pour prendre diverses orientations par rapport au conduit (17), et il est prévu une pluralité de bielles (49), chaque bielle (49) étant montée pivotante à l'une de ses extrémités, sur la structure (32, 45, 46, 47), et étant montée pivotante, à son autre extrémité, sur une région amont d'un des troisièmes volets (50), les bielles (49) étant dimensionnées et positionnées de telle sorte que, lorsque l'élément (28) est déplacé en translation vers l'arrière pour déplacer les premiers et deuxièmes volets (36, 40) vers la position prédéterminée, les deuxièmes volets (40) basculent autour des points d'appui (51), et les bielles déplacent les troisièmes volets (50) pour définir une admission d'air qui permet à l'air ambiant de s'écouler dans la tuyère en passant par l'ouverture définie entre les premiers et deuxièmes volets (36, 40).

Fig.1.

EP 0 257 147 B1

Fig. 2.

Fig. 3.